(19) Europäisches Patentamt
European Patent Office
Office européen des brevets

(11) **EP 3 923 198 A1**

(12) **EUROPEAN PATENT APPLICATION**
published in accordance with Art. 153(4) EPC

(43) Date of publication:
**15.12.2021 Bulletin 2021/50**

(21) Application number: **20908501.8**

(22) Date of filing: **04.12.2020**

(51) Int Cl.:
**G06N 3/00** (2006.01)

(86) International application number:
**PCT/CN2020/133746**

(87) International publication number:
**WO 2021/135812 (08.07.2021 Gazette 2021/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.12.2019 CN 201911415571**

(71) Applicant: **Huawei Technologies Co., Ltd.**
**Shenzhen, Guangdong 518129 (CN)**

(72) Inventors:
• **DUAN, Suxia**
**Shenzhen, Guangdong 518129 (CN)**
• **ZHAO, Anli**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **METHOD AND APPARATUS FOR PROCESSING EMOTION INFORMATION**

(57) Embodiments of this application disclose an emotion information processing method and apparatus, a computer device, and a readable storage medium, to help display an emotion dissipation process of a robot and improve a human-like degree of the robot. According to the embodiments of this application, the method includes: in response to detecting a first emotion trigger event by the robot, determining first emotion information based on the first emotion trigger event; and generating first control information based on the first emotion information. The first control information is used to indicate the robot to sequentially perform a first behavior and a second behavior that are used to express an emotion. The first behavior is used to express an emotion indicated by the first emotion information, and the second behavior is used to express an emotion that is slighter than the emotion indicated by the first emotion information.

In response to detecting a first emotion trigger event by a robot, determine first emotion information based on the first emotion trigger event — 201

Generate first control information based on the first emotion information — 202

FIG. 2

EP 3 923 198 A1

## Description

This application claims priority to Chinese Patent Application 201911415571.0, filed with the China National Intellectual Property Administration on December 31, 2019 and entitled "EMOTION INFORMATION PROCESSING METHOD AND APPARATUS", which is incorporated herein by reference in its entirety.

## TECHNICAL FIELD

This application relates to the information processing field, and in particular, to an emotion information processing method and apparatus.

## BACKGROUND

A robot (robot) is a machining apparatus that automatically executes work. The robot can receive a human instruction, run a pre-arranged program, and take actions based on a principle formulated by using artificial intelligence technologies. A task of the robot is to assist or replace human beings in their work, such as work in the fields of production and construction. With the development of science and technology, a research field of the robot has been gradually extended from the industrial field to the fields of medical, health care, entertainment, and education. The robot not only has a capability of completing a specified task, but also has a capability of interacting with people. To obtain better interaction experience, interaction between the robot and a person needs to be more humanized.

External stimulation or internal stimulation usually causes a change of emotion of a person, and the person usually expresses different emotions through different behaviors (for example, different facial expressions, voices, or actions). Because emotion expressions of people are generally common, in a communication process between people, observing behaviors of the other party helps determine emotions of the other party. For example, when a person is smiling, it may be generally considered that the person currently has a positive emotion, for example, happiness; and when a person is crying, it may be generally considered that the person currently has a negative emotion, for example, sadness.

When the robot receives external stimulation or internal stimulation, if the robot can express a change of emotion like a human being, the robot will be more human-like, a person is more likely to resonate with the robot, and use stickiness of the robot is improved. However, there are not many solutions to enable a robot to express emotions like a human being after being stimulated.

## SUMMARY

Embodiments of this application provide an emotion information processing method and apparatus, a computer device, and a readable storage medium, to help display an emotion dissipation process of a robot and improve a human-like degree of the robot.

According to a first aspect of the embodiments of this application, an emotion information processing method is provided, including: in response to detecting a first emotion trigger event by a robot, determining first emotion information based on the first emotion trigger event; and generating first control information based on the first emotion information. The first control information is used to indicate the robot to sequentially perform a first behavior and a second behavior, and both the first behavior and the second behavior are used to express an emotion. The first behavior is used to express an emotion indicated by the first emotion information, and the second behavior is used to express an emotion that is slighter than the emotion indicated by the first emotion information.

An emotion trigger event is an event that causes an emotion information change of the robot and that can be detected by the robot. An execution body is the robot, a server, or a system of the robot and the server. Emotion information can be quantified into a parameter that expresses emotions of the robot. The emotion corresponding to the second behavior is slighter than a first emotion, or the second behavior is closer to a behavior in a calm emotion than the first behavior, or a type of the emotion corresponding to the second behavior is the same as a type of the first emotion, but a degree of the emotion corresponding to the second behavior is relatively low. The robot may perform an emotion expression behavior. The first behavior and the second behavior are used to express an emotion. For example, the emotion expression behavior such as laughing, crying, or frowning of a person is displayed by making a sound, displaying an image or text, or driving an entity to make an action.

In the method provided in the first aspect, after the first emotion information of the robot is determined, the robot is indicated to sequentially perform the first behavior and the second behavior. This helps a person interacting with the robot feel an emotion dissipation process of the robot, helps improve a degree of emotion exquisiteness of the robot, to further improve a human-like degree of the robot, makes a person more likely to resonate with the robot, improves use stickiness of the robot, and improves value of the robot.

In a possible implementation, the first emotion trigger event includes at least one of the following: the robot is moved, the robot falls down, an environmental parameter of the robot is inferior to a preset parameter, a task of the robot fails, and a task of the robot succeeds. For example, the environmental parameter may be an illumination degree, a temperature, a noise decibel, or the like.

In a possible implementation, a degree of the second behavior is less than a degree of the first behavior, and the degree of the first behavior and the degree of the second behavior are at least one of an amplitude, a frequency, and a volume.

In a possible implementation, the first control information is further used to indicate the robot to perform, after performing the second behavior and before detecting a next emotion trigger event, a third behavior used to express an initial emotion, and initial emotion information used to indicate the initial emotion is pre-stored in a storage medium.

In a possible implementation, the third behavior is the 1st behavior that is performed by the robot after the robot is powered on and that is used to express an emotion.

In a possible implementation, the first emotion information is used to indicate that an emotion type of the emotion is a first type and that an emotion degree of the emotion is a first degree.

In a possible implementation, a type of the emotion expressed by the second behavior is the first type, and a degree of the emotion expressed by the second behavior is less than the first degree.

In a possible implementation, before the determining first emotion information based on the first emotion trigger event, the method further includes: in response to detecting a second emotion trigger event by the robot, determining historical emotion information based on the second emotion trigger event. The historical emotion information is used to generate historical control information, the historical control information is used to indicate the robot to perform a historical behavior, and the historical behavior is used to express an emotion indicated by the historical emotion information. The determining first emotion information based on the first emotion trigger event includes: determining first emotion change information based on the first emotion trigger event, where the first emotion change information is used to indicate a type of an emotion whose degree is changed because of the first emotion trigger event and a change amount of the degree; and determining the first emotion information based on the first emotion change information and the historical emotion information.

In a possible implementation, if both the type of the emotion indicated by the first emotion change information and a type of the emotion indicated by the historical emotion information are a first-direction emotion type, the first type is the first-direction emotion type, the first degree is positively correlated with the change amount of the emotion indicated by the first emotion change information, the first degree is positively correlated with a degree of the emotion indicated by the historical emotion information, and the first-direction emotion type is a positive emotion type (for example, happy, satisfied, or confident), or a negative emotion type (for example, sad, disappointed, or unconfident).

In a possible implementation, the first degree is negatively correlated with first duration, and the first duration is duration of an interval between a second moment at which the robot detects the second emotion trigger event and a first moment at which the robot detects the first emotion trigger event.

In an actual design, it is not strictly limited that the first duration is equal to the interval between the first moment and the second moment. The first duration may be slightly greater than or less than the interval, provided that a change of the interval can be reflected. For example, when the interval increases, the first duration also correspondingly increases.

In a possible implementation, a first-direction emotion type is a positive emotion type, and a second-direction emotion type is a negative emotion type; or the first-direction emotion type is a negative emotion type, and the second-direction emotion type is a positive emotion type. If the type of the emotion indicated by the first emotion change information is the first-direction emotion type, a type of the emotion indicated by the historical emotion information is the second-direction emotion type, and the first type is the first-direction emotion type, the first degree is positively correlated with a change amount of the emotion indicated by the first emotion information, and the first degree is negatively correlated with a degree of the emotion indicated by the historical emotion information.

In a possible implementation, the first degree is positively correlated with first duration, the first degree is negatively correlated with first duration, and the first duration is duration of an interval between a second moment at which the robot detects the second emotion trigger event and a first moment at which the robot detects the first emotion trigger event.

According to a second aspect of the embodiments of this application, an emotion information processing apparatus is further provided, including: a determining module, configured to: in response to detecting a first emotion trigger event by a robot, determine first emotion information based on the first emotion trigger event; and a generation module, configured to generate first control information based on the first emotion information. The first control information is used to indicate the robot to sequentially perform a first behavior and a second behavior, and both the first behavior and the second behavior are used to express an emotion. The first behavior is used to express an emotion indicated by the first emotion information, and the second behavior is used to express an emotion that is slighter than the emotion indicated by the first emotion information.

In a possible implementation, the first emotion trigger event includes at least one of the following: the robot is moved, the robot falls down, an environmental parameter of the robot is inferior to a preset parameter, a task of the robot fails, and a task of the robot succeeds.

In a possible implementation, a degree of the second behavior is less than a degree of the first behavior, and the degree of the first behavior and the degree of the second behavior are at least one of an amplitude, a frequency, and a volume.

In a possible implementation, the first control information is further used to indicate the robot to perform, after performing the second behavior and before detecting a next emotion trigger event, a third behavior used to express an initial emotion, and initial emotion information used to indicate the initial emotion is pre-stored in a storage medium.

In a possible implementation, the third behavior is the 1st behavior that is performed by the robot after the robot is powered on and that is used to express an emotion.

In a possible implementation, the first emotion information is used to indicate that an emotion type of the emotion is a first type and that an emotion degree of the emotion is a first degree.

In a possible implementation, a type of the emotion expressed by the second behavior is the first type, and a degree of the emotion expressed by the second behavior is less than the first degree.

In a possible implementation, the determining module is further configured to: before determining the first emotion information based on the first emotion trigger event, in response to detecting a second emotion trigger event by the robot, determine historical emotion information based on the second emotion trigger event. The historical emotion information is used to generate historical control information, the historical control information is used to indicate the robot to perform a historical behavior, and the historical behavior is used to express an emotion indicated by the historical emotion information. That a determining module determines first emotion information based on the first emotion trigger event is specifically configured to: determine first emotion change information based on the first emotion trigger event, where the first emotion change information is used to indicate a type of an emotion whose degree is changed because of the first emotion trigger event and a change amount of the degree; and determine the first emotion information based on the first emotion change information and the historical emotion information.

In a possible implementation, if both the type of the emotion indicated by the first emotion change information and a type of the emotion indicated by the historical emotion information are a first-direction emotion type, the first type is the first-direction emotion type, the first degree is positively correlated with the change amount of the emotion indicated by the first emotion change information, the first degree is positively correlated with a degree of the emotion indicated by the historical emotion information, and the first-direction emotion type is a positive emotion type or a negative emotion type.

In a possible implementation, the first degree is negatively correlated with first duration, and the first duration is duration of an interval between a second moment at which the robot detects the second emotion trigger event and a first moment at which the robot detects the first emotion trigger event.

In a possible implementation, a first-direction emotion type is a positive emotion type, and a second-direction emotion type is a negative emotion type; or the first-direction emotion type is a negative emotion type, and the second-direction emotion type is a positive emotion type. If the type of the emotion indicated by the first emotion change information is the first-direction emotion type, a type of the emotion indicated by the historical emotion information is the second-direction emotion type, and the first type is the first-direction emotion type, the first degree is positively correlated with a change amount of the emotion indicated by the first emotion information, and the first degree is negatively correlated with a degree of the emotion indicated by the historical emotion information.

In a possible implementation, the first degree is positively correlated with first duration, the first degree is negatively correlated with first duration, and the first duration is duration of an interval between a second moment at which the robot detects the second emotion trigger event and a first moment at which the robot detects the first emotion trigger event.

In a possible implementation, the apparatus further includes an execution module, and the execution module is configured to: after the generation module generates the first control information based on the first emotion information, sequentially perform the first behavior and the second behavior based on the first control information.

According to a third aspect of the embodiments of this application, a computer device is provided, including a processor and a memory. When running computer instructions stored in the memory, the processor performs the method according to any one of the first aspect or the possible implementations of the first aspect of the embodiments of this application.

According to a fourth aspect of the embodiments of this application, a computer-readable storage medium is provided, including instructions. When the instructions are run on a computer, the computer is enabled to perform the method according to any one of the first aspect or the possible implementations of the first aspect of the embodiments of this application.

According to a fifth aspect of the embodiments of this application, a computer program product is provided, including instructions. When the instructions are run on a computer, the computer is enabled to perform the method according to any one of the first aspect or the possible implementations of the first aspect of the embodiments of this application.

According to a sixth aspect of the embodiments of this application, a robot is provided, including an input module, an output module, a processor, and a memory. The input module is configured to detect an emotion trigger event, the memory is configured to store computer instructions, the processor performs the method according to any one of the first aspect or the possible implementations of the first aspect of the embodiments of this application when running the computer instructions stored in the memory, and the output module is configured to execute control information generated by the processor, for example, after receiving first control information sent by a server, the output module sequentially performs a first behavior and a second behavior based on the first control information.

According to a seventh aspect of the embodiments of this application, a robot system is provided, including a robot and a server. The robot is configured to detect an emotion trigger event, and send the detected emotion trigger event to the server. The server is configured to perform, based on the emotion trigger event detected by the robot, the method according to any one of the first aspect or the possible implementations of the first aspect of the embodiments of this application, and send control information to the robot. The robot is further configured to execute the control information sent by the server, for example, after receiving first control information sent by the server, the robot sequentially performs the first behavior and the second behavior based on the first control information.

## BRIEF DESCRIPTION OF DRAWINGS

FIG. 1A is a schematic diagram of an embodiment of a robot according to this application;
FIG. 1B is a schematic diagram of an embodiment of a server according to this application;
FIG. 1C is a schematic diagram of an embodiment of a robot system according to this application;
FIG. 2 is a schematic diagram of an embodiment of an emotion information processing method according to this application;
FIG. 3A is a schematic diagram of different behaviors corresponding to different degrees of happiness according to this application;
FIG. 3B is a schematic diagram of different behaviors corresponding to different degrees of sadness according to this application;
FIG. 4A is a schematic diagram of a dissipation process of a behavior used to express an emotion of a robot according to this application;
FIG. 4B is another schematic diagram of a dissipation process of a behavior used to express an emotion of a robot according to this application;
FIG. 4C is another schematic diagram of a dissipation process of a behavior used to express an emotion of a robot according to this application;
FIG. 5 is a possible schematic diagram of curves corresponding to two emotion dissipation equations according to this application;
FIG. 6A to FIG. 6E are schematic diagrams of a possible application scenario of an emotion information processing method according to this application;
FIG. 7A is a schematic diagram of an embodiment of an emotion information processing apparatus according to this application; and
FIG. 7B is a schematic diagram of another embodiment of an emotion information processing apparatus according to this application.

## DESCRIPTION OF EMBODIMENTS

Embodiments of this application provide an emotion information processing method and apparatus, a robot, a server, a robot system, a computer-readable storage medium, and a computer program product. The following describes the embodiments of this application with reference to accompanying drawings.

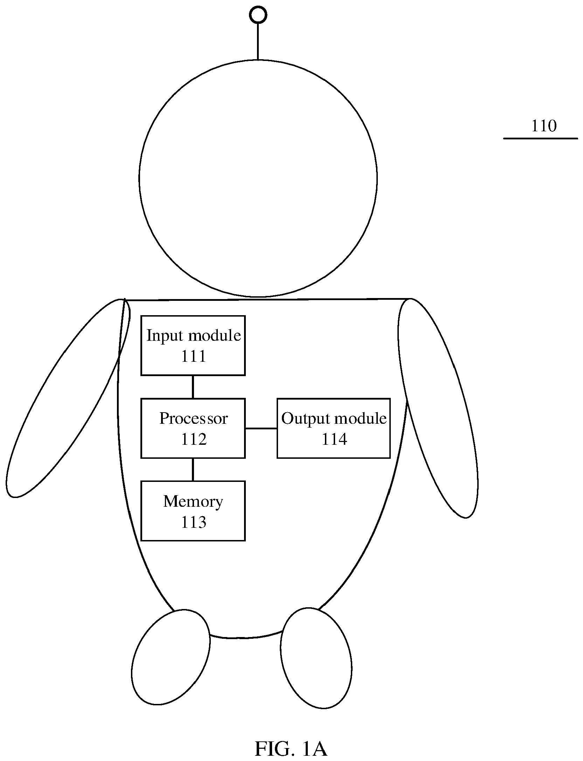

FIG. 1A is a schematic diagram of an embodiment of a robot 110 according to this application. The robot 110 may include an input module 111, a processor 112, a memory 113, and an output module 114. The input module 111 may include a sensor and a data processing module. The sensor is configured to detect data. The data processing module is configured to process the data detected by the sensor. For example, a camera is configured to detect image data, a microphone array is configured to detect audio data, a thermal sensor is configured to detect ambient temperature data, and a light sensor is configured to detect light intensity data. The memory 113 is configured to store a computer program. The processor 112 is configured to execute the computer program in the memory, perform data processing, and send control information to the output module. The output module 114 is configured to interact with a user (a person or another robot). For example, the output module 114 may be one or more of a display (for example, may be disposed on a head of the robot in FIG. 1A), a speaker, or a drive mechanism. If the robot is a human-shaped robot, the drive mechanism may be configured to control the robot to change a body posture, for example, control rotation of a hand, an arm, a leg, or a head of the robot. The drive mechanism may be further configured to control the robot to move.

In FIG. 1A, an example in which a shape of the robot 110 is a human shape is used. It should be noted that the shape of the robot 110 is not limited in this application, and the robot 110 is not required to be capable of performing all human behaviors, provided that the robot 110 can perform actions based on a principle formulated by artificial intelligence technologies and perform one or more types of behaviors used to express emotions. For example, a behavior type of a person used to express an emotion may generally include an expression, a body movement (for example, clapping hands or shaking a body) for expressing an emotion, a tone of speaking, and the like. The robot 110 only needs to be capable of presenting at least one type of the foregoing behavior used to express an emotion to the user (a person or another robot), for example, capable of displaying an expression, or capable of making a body movement, or capable of making a sound with different tones. For example, the robot 110 provided in this embodiment of this application may further be an intelligent terminal device (for example, a mobile phone).

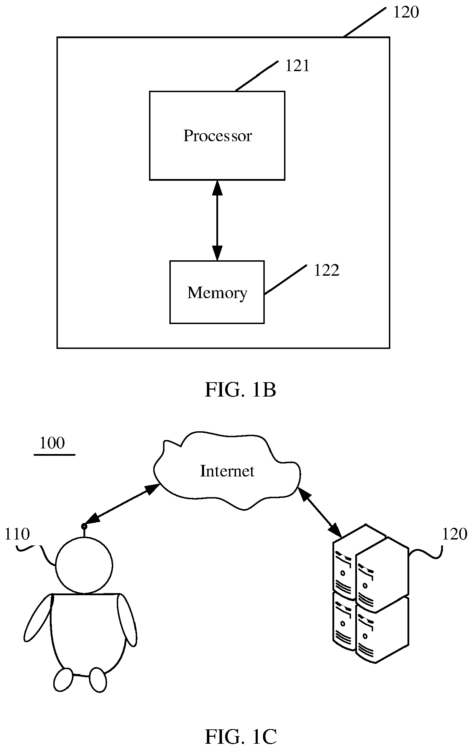

Refer to FIG. 1B. An embodiment of this application further provides a server 120. The server 120 may include a processor 121 and a memory 122.

The processor in FIG. 1A and/or FIG. 1B may be a central processing unit (central processing unit, CPU), a network processor (network processor, NP), a combination of a CPU and an NP, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in this application. A general purpose processor may be a microprocessor, or the processor may be any conventional processor or the like. Steps of the methods disclosed in this application may be directly executed and completed by using a hardware decoding processor, or may be executed and completed by using a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory, and the processor reads information in the memory and completes the steps in the foregoing methods in combination with hardware of the processor. Although only one processor is shown in the figure, the apparatus may include a plurality of processors, or the processor includes a plurality of processing units. Specifically, the processor may be a single-core processor, or may be a multi-core or many-core processor. The processor may be an ARM architecture processor.

The memory in FIG. 1A and/or FIG. 1B is configured to store computer instructions executed by the processor. The memory may be a storage circuit or a memory. The memory may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. The memory may be independent of the processor. In a possible implementation, the processor and the memory may be connected to each other through a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. Alternatively, the memory may be a storage unit in the processor, and is directly attached (attach) to the processor. This is not limited herein. Although only one memory is shown in the figure, the apparatus may alternatively include a plurality of memories, or the memory includes a plurality of storage units.

FIG. 1C is a schematic diagram of an embodiment of a robot system 100 according to this application. The robot system 100 includes the robot 110 and the server 120. For a structure of the robot 110, refer to related descriptions of FIG. 1A. For a structure of the server 120, refer to related descriptions of FIG. 1B. Details are not described herein again. The robot 110 and the server 120 may further include a communications module, and the robot 110 and the server 120 may perform wired or wireless communication through respective communications modules, for example, perform interaction through an internet.

The foregoing describes the robot 110, the server 120, and the robot system 100 provided in the embodiments of this application. The following describes an emotion information processing method provided in this application. The method may be applied to the robot 110 shown in FIG. 1A, or may be applied to the server 120 shown in FIG. 1B, or may be applied to the robot system 100 shown in FIG. 1C. When the method is applied to the robot system 100, the method is jointly performed by the robot 110 and the server 120. For ease of description, an execution body of this method is collectively referred to as a computer device below.

An emotion of a person is usually affected by some events, and an emotion change is generated. The event that causes the emotion change is referred to as an emotion trigger event. Similarly, an event that causes an emotion information change of the robot may be referred to as the emotion trigger event. After the person senses an emotion trigger event (for example, being praised) from the outside or an emotion trigger event (for example, hunger) from the inside, a corresponding emotion is generated, for example, happiness or sadness, and the emotion is expressed by using a corresponding behavior, for example, happiness is expressed by using an expression-laughter, or sadness is expressed by using an expression-frowning. When the generated emotion is calm (that is, no emotion is expressed), the person does not show the behavior used to express the emotion, that is, no expression is shown.

Because emotion expressions of people are generally common, in a communication process between people, observing behaviors of the other party helps determine emotions of the other party. For example, when a person is smiling, it may be generally considered that his current emotion is a positive emotion, for example, happiness; and when a person is crying, it may be generally considered that his current emotion is a negative emotion, for example, sadness.

To implement humanization of the robot, the robot may generate emotion information in response to a detected emotion trigger event, and simulate a manner of expressing an emotion by a person, to perform a behavior used to express the emotion, so that an interaction object (for example, a person or another robot) learns of the emotion of the robot.

In the current technology, when a robot generates emotion information e1 in response to detecting an emotion trigger event i1, the robot performs a behavior a1 corresponding to the emotion information e1 to express the emotion. Then, the robot may maintain the behavior a1 until the behavior a1 maintains preset duration, or until detecting a next emotion trigger event i2.

The emotion of the person is usually relatively exquisite. Such exquisiteness may be reflected in that the emotion generated due to the emotion trigger event gradually weakens over time until the emotion returns to relatively calm. Correspondingly, the behavior shown by the person for expressing the emotion gradually weakens over time, until the behavior used to express the emotion is no longer shown. The weakening of the emotion may be weakening a degree of a same type of emotion, or may be changing from one type of emotion to another type of emotion, for example, changing from joy to satisfaction.

However, in the current technology, after detecting the emotion trigger event i1 and before detecting the next emotion trigger event i2, the robot usually performs the behavior used to express the emotion in one of the following two manners:

(1) directly switching from performing the behavior a1 to not performing any behavior used to express the emotion; and
(2) maintaining the behavior a1.

It can be seen that, compared with a human emotion expression, an existing manner of expressing an emotion by a robot is not exquisite enough, and is not conducive to improving a human-like degree of the robot.

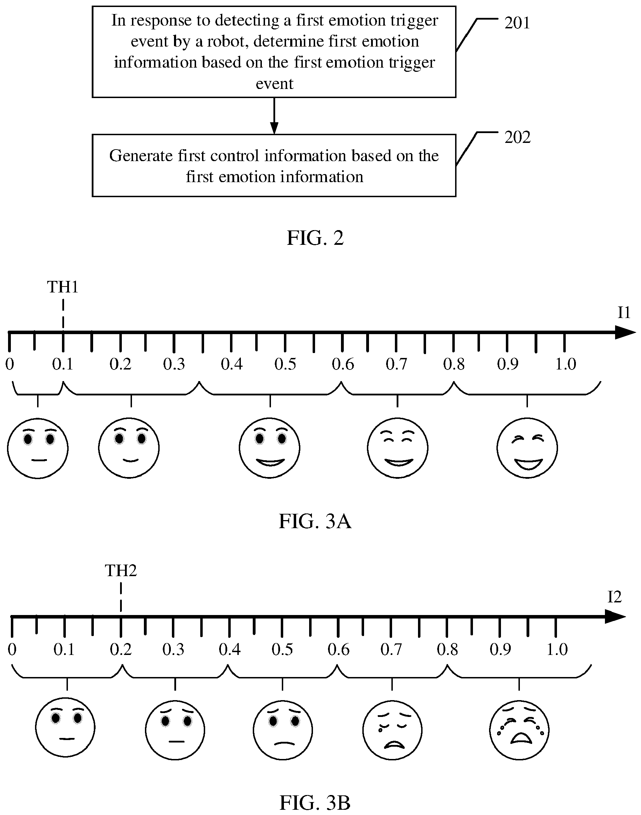

FIG. 2 is a schematic diagram of an embodiment of an emotion information processing method according to an embodiment of this application. Refer to FIG. 2. The embodiment of the emotion information processing method according to this application may include the following steps:

201: In response to detecting a first emotion trigger event by a robot, determine first emotion information based on the first emotion trigger event.

The robot may detect an emotion trigger event by using a sensor such as a camera, a thermal sensor, a light sensor, or a voice detection apparatus. When the robot detects the emotion trigger event, a computer device may obtain the emotion trigger event, and determine emotion information of the robot based on the emotion trigger event. The emotion trigger event detected in step 201 is referred to as the first emotion trigger event, and the determined emotion information is referred to as the first emotion information. The emotion information may be quantized as a parameter that expresses an emotion of the robot, and different values of the parameter may be used to represent different emotion information of the robot.

A manner in which the computer device determines the first emotion information of the robot based on the first emotion trigger event is not limited in this embodiment of this application. For example, the computer device may input the detected first emotion trigger event into a trained neural network model in an artificial intelligence manner, to output the first emotion information of the robot, or the computer device may determine, based on a preset correspondence, the first emotion information corresponding to the first emotion trigger event.

202: Generate first control information based on the first emotion information.

After determining the first emotion information, the computer device may generate the first control information based on the first emotion information. The first control information is used to indicate the robot to sequentially perform a first behavior and a second behavior. Both the first behavior and the second behavior are behaviors used to express an emotion. The first behavior is used to express an emotion indicated by the first emotion information, and the second behavior is used to express an emotion that is slighter than the emotion indicated by the first emotion information.

After detecting first stimulus data and before detecting next stimulus data, the robot not only performs the first behavior used to express the emotion corresponding to the first emotion information, but also may perform the second behavior. The second behavior is used to express the emotion that is slighter than the emotion indicated by the first emotion information. Compared with the current technology, the emotion information processing method provided in this embodiment of this application helps the robot display a process in which the emotion gradually weakens over time, so that the robot expresses the emotion in a more exquisite manner. This helps improve a human-like degree of the robot and increase user stickiness of the robot.

The robot may include a plurality of output modules. Each output module is configured to output a unit action. For example, a speaker is configured to output a sound, a display is configured to output an expression, and a drive mechanism is configured to output an action of shaking a body. In a possible implementation, the first behavior used to express the emotion information may include a plurality of unit actions simultaneously performed by the robot. For example, when a smile expression is output through the display, laughter is output through the speaker, and the body is driven by the drive mechanism to slightly shake. Similarly, the second behavior may include the plurality of unit actions simultaneously performed by the robot.

The behavior of the robot used to express an emotion may be understood with reference to a behavior of a person used to express an emotion. For example, the first behavior and the second behavior may be one or more of behaviors such as laughing, crying, frowning, sighing, clapping, singing, and speaking in a pleasant or angry tone. In addition, emotion information expressed by the behavior may refer to the emotion expressed by the behavior of the person, for example, laughing is used to express happiness, crying and frowning are used to express sadness. It should be noted that the first behavior and the second behavior may be behaviors of a same type, for example, both are laughing, but the two behaviors have different degrees.

In a possible implementation, the degree of the behavior may refer to an amplitude, a frequency, a volume, or the like of the behavior. For example, the first behavior refers to that the robot makes an expression of laughing, and an amplitude of the first behavior refers to an amplitude of a bend in a mouth, eyes, or eyebrows of the expression. The first behavior refers to that the robot makes laughter or claps hands, and a frequency of the first behavior refers to a frequency of a sound or a frequency of a clap. The first behavior refers to crying of the robot, and a volume of the first behavior refers to a volume of the crying.

In a possible implementation, if the emotion expressed by the second behavior is slighter than the emotion expressed by the first behavior, a degree of the second behavior is less than a degree of the first behavior, and the degree of the behavior may be understood as at least one of the amplitude, the frequency, and the volume. In other words, an amplitude of the second behavior is less than an amplitude of the first behavior, and/or a frequency of the second behavior is less than a frequency of the first behavior, and/or a voice generated by the second behavior is quieter than a voice generated by the first behavior.

During analysis and research on emotions and emotion expression of a person, the emotions of the person are generally classified into two categories: positive emotions and negative emotions. In addition, emotions of a same type are further classified into different degrees. For example, different degrees of emotions are distinguished by using adverbs (for example, extremely, greatly, very, and slightly, or severely, moderately, mildly, and slightly) or values indicating different degrees. In some more specific studies, positive emotions and negative emotions are further classified into more types. Alternatively, different degrees of the same type of emotion are classified more subtly.

To improve the human-like degree of the robot, in a possible implementation, the emotion information may be used to indicate a type of the emotion and a degree of the emotion.

Different types of emotions correspond to different behaviors. For emotions of the same type and of different degrees, corresponding behaviors are also different. For example, a positive integer is used to represent the degree of the emotion. A larger value indicates a higher degree of the emotion. FIG. 3A and FIG. 3B separately show different behaviors corresponding to different degrees of happiness (in FIG. 3A and FIG. 3B, an expression in a face represents an emotion expression behavior), and I1 and I2 are respectively used to represent a degree of happiness and a degree of sadness. In a possible implementation, a degree threshold may be set for various emotions. For example, in FIG. 3A, TH1 (0.1) represents a degree threshold of happiness, and in FIG. 3B, TH2 (0.2) represents a degree threshold of sadness. When the degree of happiness exceeds 0.1, a happy expression of a corresponding degree is expressed in the face. When the degree of happiness does not exceed 0.1, a happy expression behavior may not be performed, that is, no expression is expressed in the face.

In a possible implementation, it may be considered that a type of an emotion corresponding to a second behavior is the same as a type of an emotion corresponding to a first behavior, and a degree of the emotion expressed by the second behavior is less than a degree of the emotion expressed by the first behavior.

In a possible implementation, after performing the second behavior, a robot may further perform one or more other behaviors used to express an emotion. A lighter behavior indicates a later execution sequence, thereby facilitating more exquisite expression of a process in which the emotion of the robot gradually disappears.

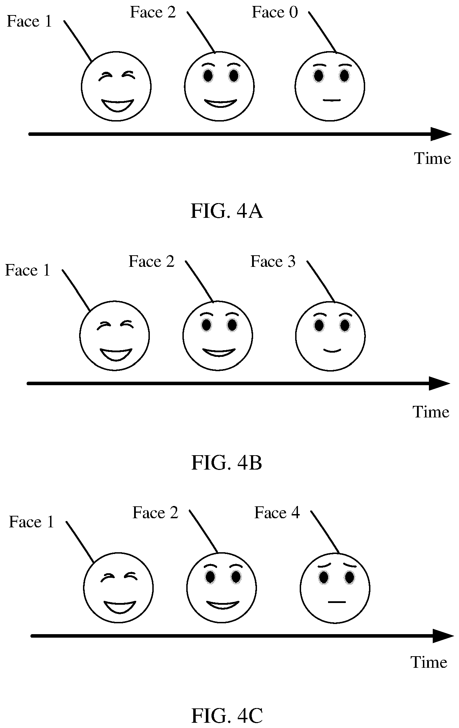

In a possible implementation, before detecting a next stimulus data, the robot may stop performing a behavior used to express emotion information after performing a last behavior used to express emotion information. FIG. 4A to FIG. 4C separately illustrate an example of a dissipation process of a behavior used to express an emotion. Refer to FIG. 4A. As time elapses, a face of the robot is successively changed into a face 1, a face 2, and a face 0. The face 1 and the face 2 respectively represent a first behavior (which is specifically a first expression) and a second behavior (which is specifically a second expression), and the face 0 is used to represent a behavior of stopping expressing emotion information (which is specifically a neutral expression).

Alternatively, in a possible implementation, initial emotion information may be set for the robot. After performing the second behavior, the robot may continuously perform a third behavior used to express the initial emotion information. The initial emotion information may be pre-stored in a storage medium. In a possible implementation, the storage medium may store a plurality of pieces of candidate initial emotion information, and a computer device may dynamically select one piece of candidate initial emotion information as current initial emotion information. For example, the robot may be designed to periodically change the initial emotion information. For example, 28 days may be used as a periodicity, the computer device may store 28 pieces of candidate initial emotion information, each piece of candidate initial emotion information corresponds to one day in the periodicity, and candidate initial emotion information of two adjacent days is different. The computer device may determine the current initial emotion information based on an order of a current date in a current periodicity (for example, today is the second day after a current Sunday). Refer to FIG. 4B and FIG. 4C. A face 3 and a face 4 are used to represent different initial emotion information. With reference to FIG. 3A, initial emotion information corresponding to the face 3 in FIG. 4B is: happy, and a degree is between 0.1 and 0.35. With reference to FIG. 3B, initial emotion information corresponding to the face 4 in FIG. 4C is: sad, and a degree is between 0.2 and 0.4.

Stimulus data (currently detected stimulus data is referred to as first stimulus data): The first stimulus data is not limited to data detected by one type of sensor, and may include data detected by a plurality of types of sensors, for example, including image data detected by using a camera, audio data detected by using a voice detection apparatus, ambient temperature data detected by using a thermal sensor, and light intensity data detected by using a light sensor.

The computer device may determine, based on the first stimulus data, whether an emotion trigger event, that is, an event that causes an emotion change of the robot, currently occurs. If the emotion trigger event occurs, it is determined that the robot detects the emotion trigger event (referred to as a first emotion trigger event).

For step 201, in a possible implementation, the computer device may detect corresponding data by using sensors such as the camera, the thermal sensor, the light sensor, and the voice detection apparatus. For example, detecting image data by using the camera, detecting audio data by using the voice detection apparatus, detecting ambient temperature data by using the thermal sensor, and detecting light intensity data by using the light sensor. The computer device may determine, based on data (referred to as the stimulus data) detected by one or more sensors, whether the emotion trigger event is detected. Specifically, the computer device may perform recognition processing on the stimulus data, for example, the computer device may perform facial recognition on a detected image, to recognize an expression of a person, a quantity of people, and the like in the image. After a face is recognized, the computer device may further recognize a body posture of the person, for example, recognize that the person is waving a hand. The computer device may perform text recognition on the detected audio data, and perform semantic analysis on a recognized text, to obtain an intent of a person to speak, for example, instructing the robot to execute a task or greeting the robot. After recognition processing is performed on the stimulus data, the computer device may recognize the emotion trigger event (referred to as the first emotion trigger event) indicated by the stimulus data. For example, the first emotion trigger event may include at least one of the following: the robot is moved, the robot falls down, an environmental parameter of the robot is inferior to a preset parameter, a task of the robot fails, and a task of the robot succeeds. The environmental parameter may refer to a light intensity, an ambient temperature, a noise decibel, or the like.

In a possible implementation, the computer device may pre-store a correspondence between the emotion trigger event and emotion change information. After recognizing the first emotion trigger event indicated by the first stimulus data, the computer device may determine corresponding first emotion change information. The first emotion change information is used to indicate a type of an emotion whose degree is changed because of the first emotion trigger event and a change amount of the degree. In a possible implementation, the type and the degree of the emotion indicated by the first emotion change information are a type and a degree of an emotion indicated by first emotion information.

In a possible implementation, the correspondence between the emotion trigger event and the emotion change information may be determined based on a needs level of the robot. This helps design a correspondence that better conforms to an emotion change of a person, and improves a human-like degree of the robot.

In a possible implementation, the first emotion change information may be used to indicate a type of an emotion affected by the first emotion trigger event and a degree change amount of the type of the emotion caused by the first emotion trigger event. For example, Table 1 and Table 2 show types of emotions that are respectively affected by a plurality of emotion trigger events and degree change amounts of corresponding types of emotions. A value greater than 0 and not greater than 1 is used to represent the degree change amount, and a larger value indicates a larger degree change amount.

Table 1

| Degree change amount of happiness | Types of met needs | Emotion trigger event |
|---|---|---|
| 1 | Self-actualization | Complete a task with children |
| 0.8 | Social needs | Long-term interaction; long-term companionship |
| 0.6 | Gain respect | Be praised; be warmly greeted; win a game |
| 0.3 | Security needs | Accessories are intact; hear good music |
| 0.1 | Physiological needs | Sufficient battery level |

Table 2

| Degree change amount of sadness | Types of unmet needs | Emotion trigger event |
|---|---|---|
| 0.8 | Self-actualization | Task failed |
| 0.7 | Social needs | No communication with people for a long time |
| 0.5 | Gain respect | Be scolded; be ignored when meeting with others, lose a game |
| 0.3 | Security needs | Accessories are not intact; temperature is very high; noise is very loud |
| 0.1 | Physiological needs | Low battery level |

When the emotion trigger event is sensed, a current emotion of a person usually changes. For ease of description, before the current emotion changes because of the emotion trigger event, the current emotion may be referred to as a historical emotion margin, and a changed current emotion is referred to as a stimulus response emotion. The stimulus response emotion is not only determined by an emotion change caused by a stimulus, but also determined by the historical emotion margin.

In a possible implementation, the historical emotion margin is determined by a previous stimulus response emotion. Therefore, to improve the human-like degree of the robot, if the robot detects a second emotion trigger event before detecting the first emotion trigger event, and determines corresponding emotion information (referred to as historical emotion information) based on the second emotion trigger event, where the historical emotion information is used to generate historical control information, the historical control information is used to indicate the robot to perform a historical behavior, and the historical behavior is used to express an emotion indicated by the historical emotion information, in a possible implementation, step 201 may include: determining the first emotion change information based on the first emotion trigger event, and then determining the first emotion information based on the first emotion change information and the historical emotion information.

For ease of description, the type of the emotion indicated by the first emotion information is referred to as a first type, and the degree of the emotion indicated by the first emotion information is referred to as a first degree.

Influence of emotions may be mutually reinforcing or mutually inhibiting.

In a possible implementation, if both the type of the emotion indicated by the first emotion change information and the type of the emotion indicated by the historical emotion information are a first-direction emotion type, the first type is the first-direction emotion type, the first degree is positively correlated with the change amount of the emotion indicated by the first emotion change information, the first degree is positively correlated with a degree of the emotion indicated by the historical emotion information, and the first-direction emotion type is a positive emotion type or a negative emotion type.

It is assumed that the first-direction emotion type is a positive emotion type, and a second-direction emotion type is a negative emotion type; or the first-direction emotion type is a negative emotion type, and the second-direction emotion type is a positive emotion type. In a possible implementation, if the type of the emotion indicated by the first emotion change information is the first-direction emotion type, the type of the emotion indicated by the historical emotion information is the second-direction emotion type, and the first type is the first-direction emotion type, the first degree is positively correlated with a change amount of the emotion indicated by the first emotion information, and the first degree is negatively correlated with the degree of the emotion indicated by the historical emotion information. If the first type is the second-direction emotion type, the first degree is negatively correlated with the change amount of the emotion indicated by the first emotion information, and the first degree is positively correlated with the degree of the emotion indicated by the historical emotion information.

In a possible implementation, the historical emotion margin is further related to duration between a moment for obtaining the second emotion trigger event and a moment for obtaining the first emotion trigger event. It is assumed that first duration is duration of an interval between a second moment for obtaining the second emotion trigger event and a first moment for obtaining the first emotion trigger event.

In a possible implementation, if both the first type and the type of the emotion indicated by the historical emotion information are negative emotion types or positive emotion types, the first degree is negatively correlated with the first duration.

In an actual design, it is not strictly limited that the first duration is equal to the interval between the first moment and the second moment, and may be slightly greater than or less than the interval, provided that a change of the interval can be reflected. For example, when the interval increases, the first duration also correspondingly increases.

In a possible implementation, if the first type is the negative emotion type, and the type of the emotion indicated by the historical emotion information is the positive emotion type, or if the first type is the positive emotion type, and the type of the emotion indicated by the historical emotion information is the negative emotion type, the first degree is positively correlated with the first duration.

For example, the historical emotion margin I_r may be calculated according to the following formula (referred to as a dissipation equation) and based on the first duration and the degree of the emotion indicated by the historical emotion information:

I_r = I_2 × f = I_2 × 1/(param1 + param2 × Math.exp(param3/t)), where param1, param2 and param3 are three parameters of the equation, t represents the first duration, and I_2 represents the degree of the emotion indicated by the historical emotion information. By adjusting these three parameters, different dissipation curves can be fitted.

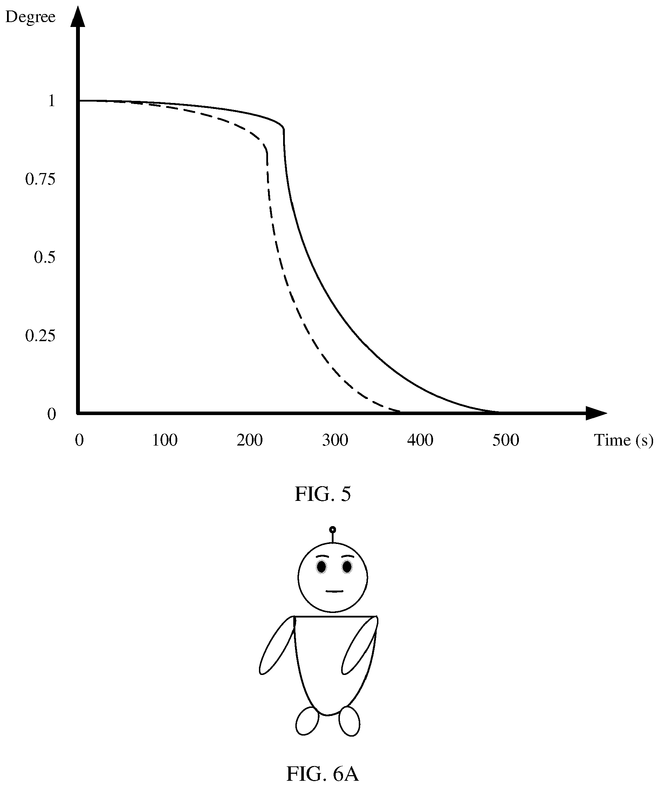

In a possible implementation, one or more parameters in a dissipation equation corresponding to different types of emotions may be different. A solid-line curve and a dashed-line curve in FIG. 5 respectively represent a dissipation curve corresponding to happiness of degree 1 and a dissipation curve corresponding to sadness of degree 1. It can be seen that the sameness between the two curves lies in that both are "inverted S-shaped" curves. That is, the degree increases first and then decreases over time. A difference is that duration (referred to as dissipation duration) experienced by decreasing the degree of sadness from 1 to 0 is shorter than duration experienced by decreasing the degree of happiness from 1 to 0. In a possible implementation, dissipation duration of the negative emotion is shorter than dissipation duration of the positive emotion. This helps the robot to express more positive emotions.

The foregoing separately describes a manner of determining the emotion change information corresponding to the emotion trigger event and the historical emotion margin. The following uses an example to describe a method for determining the first emotion information based on the emotion change information and the historical emotion margin.

If there are a plurality of types of emotions of the robot, in a possible implementation, the first type indicated by the first emotion information of the robot corresponds to one emotion type, and the first type corresponds to an emotion type whose emotion degree is greater than a threshold. In a possible implementation, degrees of all types of emotions may be separately determined based on the emotion change information, the historical emotion margin, and an influence amount between different types of emotions, and a degree higher than the threshold is selected from the degrees. The degree is used as the first degree, and a type of an emotion corresponding to the degree is used as the first type.

The following uses an example to describe the method for determining the first emotion information of the robot.

It is assumed that the robot includes three types of emotions, denoted as A, B, and C, and degrees of the three emotions are denoted as I(A), I(B), and I(C). A and B reinforce each other, A and C inhibit each other, and B and C inhibit each other.

When the robot detects the first emotion trigger event, it is assumed that the first emotion trigger event causes a degree change of A, and a change amount is a, degrees of the three emotions may be separately calculated according to the following process:

$$I(B) = F(B) + E(B) + In(B\_A) - In(B\_C);$$

$$I(C) = F(C) + E(C) - In(C\_B) - In(C\_A);$$

$$I(A) = F(A) + E(A) + In(A\_B) - In(A\_C);$$

F(A), F(B), and F(C) are respectively historical emotion margins of A, B, and C. When the historical emotion margins of the three are all 0, for example, the first emotion trigger event is a first emotion trigger event detected after the robot is powered on. F(A), F(B), and F(C) are degrees of A, B, and C that are determined based on the initial emotion information. For example, if the initial emotion information is used to indicate an emotion B, and a degree is b, F(A) = 0, F(B) = b, and F(C) = 0.

E(A), E(B), and E(C) are respectively degree changes of A, B, and C caused by the first emotion trigger event. For the degree change of A caused by the first emotion trigger event, a change amount is a. In this case, E(A) = a. E(B) = 0, and E(C) = 0.

In(A_B) is an influence amount of B on A, and In(B_A) is an influence amount of A on B. In a possible implementation, In(A_B) = in(A_B) × I(B), In(B_A) = in(B_A) × E(A), where in(A_B) is an influence factor of B on A, and in(B_A) is an influence factor of A on B, and the two may be different or the same. Meanings of other In() and in() may be similarly understood, and details are not described herein again.

A degree exceeds the threshold is selected from I(A), I(B), and I(C) as the degree indicated by the first emotion information, and a type of an emotion corresponding to the degree is used as the type of the emotion indicated by the first emotion information. When a plurality of degrees all exceed the threshold, a maximum degree may be used as the degree indicated by the first emotion information, and a type of the emotion corresponding to the degree may be used as the type of the emotion indicated by the first emotion information.

If the computer device is the robot, the method embodiment of this application may further include: sequentially performing the first behavior and the second behavior based on the first control information.

The following describes an application scenario of an emotion information processing method provided in this application. It is assumed that a correspondence between emotion information and emotion expression is shown in FIG. 3A and FIG. 3B, a correspondence between an emotion trigger event and an emotion change is shown in Table 1 and Table 2, and a computer device is a robot.

1: The robot is powered on.

Refer to FIG. 6A. An emotion corresponding to an expression of the robot may be "calm".

2: The robot determines initial emotion information based on a current time.

It is assumed that the initial emotion information is happy, and a degree is f1 = 0.3.

3: The robot detects the emotion trigger event.

A sensor of a signal such as sound, contact, and light detects a stimulus signal, processes the stimulus signal, and determines whether the emotion trigger event is detected.

4: In response to detecting an emotion trigger event i1 at a moment t1, the robot determines emotion change information v1 based on the emotion trigger event i1.

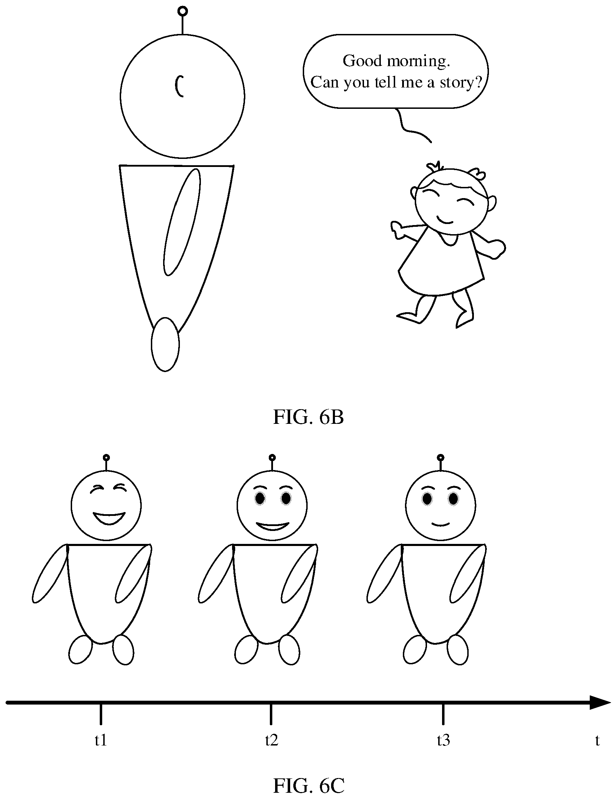

Refer to FIG. 6B. A user (using a child as an example in FIG. 6B) warmly greets the robot and says, "Good morning. Can you tell me a story?" In this case, the robot may determine that the emotion trigger event i1 is detected. The emotion trigger event i1 is "being warmly greeted". Refer to Table 1. It may be determined that the emotion change information v1 is happy, 0.5.

5: The robot determines emotion information e1 based on the initial emotion information and the emotion change information v1.

Then, the robot may determine the emotion information e1 based on the initial emotion information and the emotion change information v1. For example, the robot includes two types of emotions (A and C), where A is happy, C is sad, in(A_C) is 0.1, in(C_A) is 0.2, a threshold of a degree of C is 0.2, and a threshold of a degree of A is 0.1. A specific process of determining the emotion information e1 may be as follows:

I(C) = F(C) + E(C) - in(C_A) × E(A) = 0 + 0 - 0.2 × 0.5 = -0.1. If the degree of sadness is less than 0, the degree of sadness may be considered as 0.

$$I(A) = F(A) + E(A) - in(A\_C) \times I(C) = 0.3 + 0.6 - 0.1 \times 0 = 0.9.$$

For understanding of the foregoing two formulas, refer to the foregoing description of the calculation process of the degrees of the three emotions, and details are not described herein again.

Because I(C) < 0.2 and I(A) > 0.1, the emotion information e1 is happy and the degree I(A) is 0.9.

6: The robot performs an emotion dissipation behavior a1 based on the first emotion information.

Refer to FIG. 6C. t represents time, t1, t2, and t3 respectively represent different moments, t1 is earlier than t2, and t2 is earlier than t3. For example, the emotion dissipation behavior a1 includes three emotion behaviors (a behavior 1, a behavior 2, and a behavior 3). The behavior 1 corresponds to the emotion information e1, and reference may be made to FIG. 3A. An emotion type corresponding to the behavior 2 is the same as an emotion type corresponding to the behavior 1, but an emotion degree corresponding to the behavior 2 is lower than an emotion degree corresponding to the behavior 1. The behavior 3 corresponds to the initial emotion information.

7: The robot detects the emotion trigger event.

8: In response to detecting an emotion trigger event i2 at a moment t4, the robot determines emotion change information v2 based on the emotion trigger event i2.

After step 4, the robot may further obtain, based on detected audio data and image data, a task instruction, that is, an instruction for reading a story, issued by the user. The robot may download audio of the story through a network or read audio of the story from a local storage medium, and play audio data of the story through a speaker.

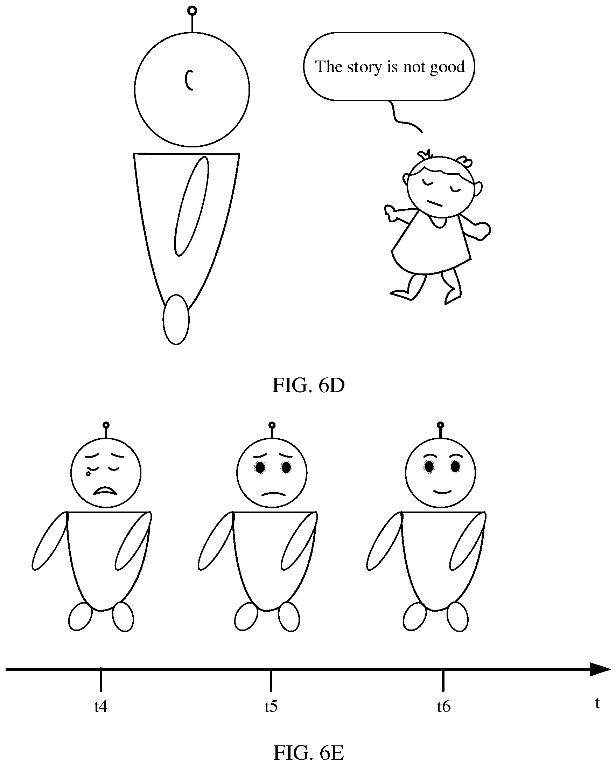

Refer to FIG. 6D. It is assumed that when the audio data of the story is played (assuming at the moment t4), the user frowns and says "the story is not good." In this case, the robot may detect the emotion trigger event i2, which is specifically a task failure. The robot may determine the emotion change information v2 based on the emotion trigger event i2. Refer to Table 2. Historical emotion change information is sad, 0.8.

9: In response to detecting the emotion trigger event i2 at the moment t4, the robot determines a dissipation margin of the emotion information e1 based on t1 and t4.

It is assumed that t1 is 9:15 and t4 is 9:20, a dissipation margin of the first emotion information is happy, and a degree is $l1 \times f(t4 - t1) = 0.3$, where $f(t4 - t1)$ may be understood with reference to descriptions corresponding to FIG. 5. Details are not described herein again.

A time sequence relationship between step 8 and step 9 is not limited.

10: The robot determines emotion information e2 based on the dissipation margin of the emotion information e1 and the emotion change information v2.

Then, the robot may determine the emotion information e2 based on the dissipation margin of the emotion information e1 and the emotion change information v2. For example, a specific process of determining the emotion information e2 may be as follows:

$$I(A) = F(A) + E(A) - in(A\_C) \times E(C) = 0.3 + 0 - 0.1 \times 0.8 = 0.22.$$

$$I(C) = F(C) + E(C) - in(C\_A) \times I(A) = 0 + 0.8 - 0.2 \times 0.22 = 0.8 - 0.044 = 0.756.$$

Because $I(C) > 0.2$, $I(A) > 0.1$, and $I(C) > I(A)$, the emotion information e2 is happy and the degree I(C) is 0.756.

11: The robot performs an emotion dissipation behavior a2 based on the emotion information e2.

Refer to FIG. 6E. t represents time, t4, t5, and t6 respectively represent different moments, t4 is earlier than t5, and t5 is earlier than t6. For example, the emotion dissipation behavior a2 includes three emotion behaviors (a behavior 4, a behavior 5, and a behavior 3). The behavior 4 corresponds to the emotion information e2, refer to FIG. 3B. An emotion type corresponding to the behavior 5 is the same as an emotion type corresponding to the behavior 4, but an emotion degree corresponding to the behavior 5 is lower than an emotion degree corresponding to the behavior 4.

With reference to FIG. 1A, the computer device in any one of the foregoing method embodiments may be the robot 110. In this case, the input module 111 may be configured to detect the emotion trigger event (for example, the first emotion trigger event in the foregoing method embodiment). The memory 113 is configured to store computer instructions for executing the solutions of this application. The processor 112 is configured to perform any method embodiment provided in the embodiments of this application when executing the computer instructions in the memory 113. The output module 114 is configured to receive and execute control information generated by the processor 112, for example, sequentially performing the first behavior and the second behavior based on the first control information.

With reference to FIG. 1B, the computer device in any one of the foregoing method embodiments may be the server 120. The memory 122 is configured to store computer instructions for executing the solutions of this application, and the processor 121 is configured to: when executing the computer instructions in the memory 122, execute any method embodiment provided in the embodiments of this application, and generate the first control information.

With reference to FIG. 1C, the computer device in any one of the foregoing method embodiments may be a computer system 100. The robot 110 and the server 120 jointly perform any one of the foregoing method embodiments. For example, the robot 110 is configured to detect the emotion trigger event, and send the detected emotion trigger event to the server 120. The server 120 is configured to: perform any method embodiment of this application based on the emotion trigger event detected by the robot 110, generate control information, and send the control information to the robot 110. The robot 110 is further configured to execute the control information sent by the server 120, for example, after receiving the first control information sent by the server 120, the robot 110 sequentially performs the first behavior and the second behavior based on the first control information.

The foregoing describes the embodiments of this application from a perspective of a method and an entity device. The following describes, from a perspective of a function module, an emotion information processing apparatus provided in an embodiment of this application.

From the perspective of a function module, function module division may be performed on the apparatus for performing the emotion information processing method in this application according to the foregoing method embodiments. For example, each function module may be obtained through division corresponding to each function, or two or more functions may be integrated into one function module. The integrated function module may be implemented in a form of hardware, or may be implemented in a form of a software function unit.

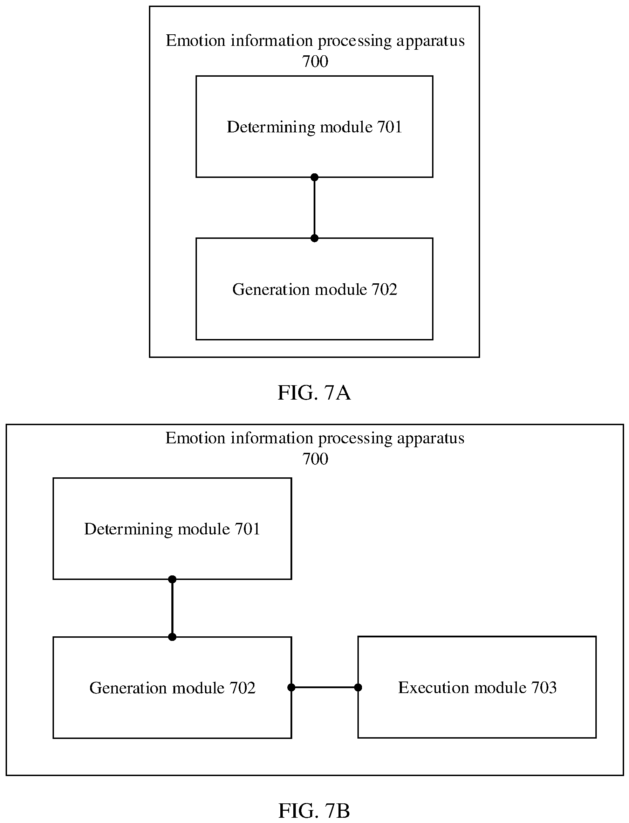

For example, when function units are divided in an integrated manner, FIG. 7A is a schematic structural diagram of an emotion information processing apparatus. As shown in FIG. 7A, an embodiment of the emotion information processing apparatus 700 in this application may include:

a determining module 701, configured to: in response to detecting a first emotion trigger event by a robot, determine first emotion information based on the first emotion trigger event; and a generation module 702, configured to generate first control information based on the first emotion information, where the first control information is used to indicate the robot to sequentially perform a first behavior and a second behavior, both the first behavior and the second behavior are used to express an emotion, the first behavior is used to express an emotion indicated by the first emotion information, and the second behavior is used to express an emotion that is slighter than the emotion indicated by the first emotion information.

In a possible implementation, the first emotion trigger event includes at least one of the following: the robot is moved, the robot falls down, an environmental parameter of the robot is inferior to a preset parameter, a task of the robot fails, and a task of the robot succeeds.

In a possible implementation, a degree of the second behavior is less than a degree of the first behavior, and the degree of the first behavior and the degree of the second behavior are at least one of an amplitude, a frequency, and a volume.

In a possible implementation, the first control information is further used to indicate the robot to perform, after performing the second behavior and before detecting a next emotion trigger event, a third behavior used to express an initial emotion, and initial emotion information used to indicate the initial emotion is pre-stored in a storage medium.

In a possible implementation, the third behavior is the 1st behavior that is performed by the robot after the robot is powered on and that is used to express an emotion.

In a possible implementation, the first emotion information is used to indicate that an emotion type of the emotion is a first type and that an emotion degree of the emotion is a first degree.

In a possible implementation, a type of the emotion expressed by the second behavior is the first type, and a degree of the emotion expressed by the second behavior is less than the first degree.

In a possible implementation, the determining module 701 is further configured to: before determining the first emotion information based on the first emotion trigger event, in response to detecting a second emotion trigger event by the robot, determine historical emotion information based on the second emotion trigger event. The historical emotion information is used to generate historical control information, the historical control information is used to indicate the robot to perform a historical behavior, and the historical behavior is used to express an emotion indicated by the historical emotion information. That a determining module determines first emotion information based on the first emotion trigger event is specifically configured to: determine first emotion change information based on the first emotion trigger event, where the first emotion change information is used to indicate a type of an emotion whose degree is changed because of the first emotion trigger event and a change amount of the degree; and determine the first emotion information based on the first emotion change information and the historical emotion information.

In a possible implementation, if both the type of the emotion indicated by the first emotion change information and a type of the emotion indicated by the historical emotion information are a first-direction emotion type, the first type is the first-direction emotion type, the first degree is positively correlated with the change amount of the emotion indicated by the first emotion change information, the first degree is positively correlated with a degree of the emotion indicated by the historical emotion information, and the first-direction emotion type is a positive emotion type or a negative emotion type.

In a possible implementation, the first degree is negatively correlated with first duration, and the first duration is duration of an interval between a second moment at which the robot detects the second emotion trigger event and a first moment at which the robot detects the first emotion trigger event.

In a possible implementation, the first-direction emotion type is a positive emotion type, and a second-direction emotion type is a negative emotion type; or the first-direction emotion type is a negative emotion type, and the second-direction emotion type is a positive emotion type. If the type of the emotion indicated by the first emotion change information is the first-direction emotion type, the type of the emotion indicated by the historical emotion information is the second-direction emotion type, and the first type is the first-direction emotion type, the first degree is positively correlated with a change amount of the emotion indicated by the first emotion information, and the first degree is negatively correlated with the degree of the emotion indicated by the historical emotion information.

In a possible implementation, the first degree is positively correlated with the first duration, the first degree is negatively correlated with the first duration, and the first duration is the duration of the interval between the second moment at which the robot detects the second emotion trigger event and the first moment at which the robot detects the first emotion trigger event.

Refer to FIG. 7B. In a possible implementation, the apparatus further includes an execution module 703. The execution module 703 is configured to: after the generation module 702 generates the first control information based on the first emotion information, sequentially perform the first behavior and the second behavior based on the first control information. The apparatus corresponding to FIG. 7B may be disposed in the robot 110 or the robot system 100.

In a possible implementation, computer executable instructions or the computer instructions in this embodiment of this application may also be referred to as application program code. This is not specifically limited in this embodiment of this application.

All or some of the foregoing embodiments may be implemented by using software, hardware, firmware, or any combination thereof. When the software is used for implementation, all or some of the embodiments may be implemented in a form of a computer program product.

The computer program product includes one or more computer instructions. When the computer executable instructions are loaded and executed on a computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive Solid State Disk (SSD)), or the like.

In the specification, claims, and accompanying drawings of this application, the terms "first", "second", and the like are intended to distinguish between similar objects but do not indicate a specific order or sequence. It should be understood that the terms used in such a way are interchangeable in proper cases. This is merely a discrimination manner that is used when objects having a same attribute are described in the embodiments of this application. In addition, the terms "include", "contain" and any other variants mean to cover the non-exclusive inclusion, so that a process, method, system, product, or device that includes a series of units is not limited to those units, but may include other units not expressly listed or inherent to such a process, method, system, product, or device. In the embodiments of this application, "a plurality of" means two or more than two.

In the embodiments of this application, the word "example" or "for example" is used to represent giving an example, an illustration, or a description. Any embodiment or design scheme described as an "example" or "for example" in the embodiments of this application should not be explained as being more preferred or having more advantages than another embodiment or design scheme. Exactly, use of the word "example" or "for example" or the like is intended to present a related concept in a specific manner.

In the embodiments of this application, for ease of understanding, a plurality of examples are used for description. However, the examples are merely examples, and it does not mean that the examples are optimal implementations for implementing this application.

The technical solutions provided in this application are described in detail above. The principle and implementation of this application are described herein through specific examples. The description about the embodiments is merely provided to help understand the method and core ideas of this application. In addition, a person of ordinary skill in the art can make variations and modifications to this application in terms of specific implementations and application scopes according to the ideas of this application. Therefore, content of the specification shall not be construed as a limit to this application.

**Claims**

1. An emotion information processing method, comprising:

    in response to detecting a first emotion trigger event by a robot, determining first emotion information based on the first emotion trigger event; and
    generating first control information based on the first emotion information, wherein the first control information is used to indicate the robot to sequentially perform a first behavior and a second behavior, both the first behavior and the second behavior are used to express an emotion, the first behavior is used to express an emotion indicated by the first emotion information, and the second behavior is used to express an emotion that is slighter than the emotion indicated by the first emotion information.

2. The method according to claim 1, wherein the first emotion trigger event comprises at least one of the following: the robot is moved, the robot falls down, an environmental parameter of the robot is inferior to a preset parameter, a task of the robot fails, and a task of the robot succeeds.

3. The method according to claim 1 or 2, wherein a degree of the second behavior is less than a degree of the first behavior, and the degree of the first behavior and the degree of the second behavior are at least one of an amplitude, a frequency, and a volume.

4. The method according to any one of claims 1 to 3, wherein the first control information is further used to indicate the robot to perform, after performing the second behavior and before detecting a next emotion trigger event, a third behavior used to express an initial emotion, and initial emotion information used to indicate the initial emotion is pre-stored in a storage medium.

5. The method according to claim 4, wherein the third behavior is the 1st behavior that is performed by the robot after the robot is powered on and that is used to express an emotion.

6. The method according to any one of claims 1 to 5, wherein the first emotion information is used to indicate that an emotion type of the emotion is a first type and that an emotion degree of the emotion is a first degree.

7. The method according to claim 6, wherein a type of the emotion expressed by the second behavior is the first type, and a degree of the emotion expressed by the second behavior is less than the first degree.

8. The method according to claim 6 or 7, wherein before the determining first emotion information based on the first emotion trigger event, the method further comprises:

in response to detecting a second emotion trigger event by the robot, determining historical emotion information based on the second emotion trigger event, wherein the historical emotion information is used to generate historical control information, the historical control information is used to indicate the robot to perform a historical behavior, and the historical behavior is used to express an emotion indicated by the historical emotion information; and

the determining first emotion information based on the first emotion trigger event comprises:

determining first emotion change information based on the first emotion trigger event, wherein the first emotion change information is used to indicate a type of an emotion whose degree is changed because of the first emotion trigger event and a change amount of the degree; and

determining the first emotion information based on the first emotion change information and the historical emotion information.

9. The method according to claim 8, wherein if both the type of the emotion indicated by the first emotion change information and a type of the emotion indicated by the historical emotion information are a first-direction emotion type, the first type is the first-direction emotion type, the first degree is positively correlated with the change amount of the emotion indicated by the first emotion change information, the first degree is positively correlated with a degree of the emotion indicated by the historical emotion information, and the first-direction emotion type is a positive emotion type or a negative emotion type.

10. The method according to claim 9, wherein the first degree is negatively correlated with first duration, and the first duration is duration of an interval between a second moment at which the robot detects the second emotion trigger event and a first moment at which the robot detects the first emotion trigger event.

11. The method according to claim 8, wherein a first-direction emotion type is a positive emotion type, and a second-direction emotion type is a negative emotion type; or

the first-direction emotion type is a negative emotion type, and the second-direction emotion type is a positive emotion type; and

if the type of the emotion indicated by the first emotion change information is the first-direction emotion type, a type of the emotion indicated by the historical emotion information is the second-direction emotion type, and the first type is the first-direction emotion type, the first degree is positively correlated with the change amount of the emotion indicated by the first emotion information, and the first degree is negatively correlated with a degree of the emotion indicated by the historical emotion information.

**12.** The method according to claim 11, wherein the first degree is positively correlated with first duration, and the first duration is duration of an interval between a second moment at which the robot detects the second emotion trigger event and a first moment at which the robot detects the first emotion trigger event.

**13.** An emotion information processing apparatus, comprising:

a determining module, configured to: in response to detecting a first emotion trigger event by a robot, determine first emotion information based on the first emotion trigger event; and

a generation module, configured to generate first control information based on the first emotion information, wherein the first control information is used to indicate the robot to sequentially perform a first behavior and a second behavior, both the first behavior and the second behavior are used to express an emotion, the first behavior is used to express an emotion indicated by the first emotion information, and the second behavior is used to express an emotion that is slighter than the emotion indicated by the first emotion information.

**14.** The apparatus according to claim 13, wherein the first emotion trigger event comprises at least one of the following: the robot is moved, the robot falls down, an environmental parameter of the robot is inferior to a preset parameter, a task of the robot fails, and a task of the robot succeeds.

**15.** The apparatus according to claim 13 or 14, wherein a degree of the second behavior is less than a degree of the first behavior, and the degree of the first behavior and the degree of the second behavior are at least one of an amplitude, a frequency, and a volume.

**16.** The apparatus according to any one of claims 13 to 15, wherein the first control information is further used to indicate the robot to perform, after performing the second behavior and before detecting a next emotion trigger event, a third behavior used to express an initial emotion, and initial emotion information used to indicate the initial emotion is pre-stored in a storage medium.

**17.** The apparatus according to claim 16, wherein the third behavior is the 1st behavior that is performed by the robot after the robot is powered on and that is used to express an emotion.

**18.** The apparatus according to any one of claims 13 to 17, wherein the first emotion information is used to indicate that an emotion type of the emotion is a first type and that an emotion degree of the emotion is a first degree.

**19.** The apparatus according to claim 18, wherein a type of the emotion expressed by the second behavior is the first type, and a degree of the emotion expressed by the second behavior is less than the first degree.

**20.** The apparatus according to claim 18 or 19, wherein the determining module is further configured to:

before determining the first emotion information based on the first emotion trigger event, in response to detecting a second emotion trigger event by the robot, determine historical emotion information based on the second emotion trigger event, wherein the historical emotion information is used to generate historical control information, the historical control information is used to indicate the robot to perform a historical behavior, and the historical behavior is used to express an emotion indicated by the historical emotion information; and

that a determining module determines first emotion information based on the first emotion trigger event is specifically configured to:

determine first emotion change information based on the first emotion trigger event, wherein the first emotion change information is used to indicate a type of an emotion whose degree is changed because of the first emotion trigger event and a change amount of the degree; and

determine the first emotion information based on the first emotion change information and the historical emotion information.

**21.** The apparatus according to claim 20, wherein if both the type of the emotion indicated by the first emotion change information and a type of the emotion indicated by the historical emotion information are a first-direction emotion type, the first type is the first-direction emotion type, the first degree is positively correlated with the change amount of the emotion indicated by the first emotion change information, the first degree is positively correlated with a degree of the emotion indicated by the historical emotion information, and the first-direction emotion type is a positive emotion type or a negative emotion type.

22. The apparatus according to claim 21, wherein the first degree is negatively correlated with first duration, and the first duration is duration of an interval between a second moment at which the robot detects the second emotion trigger event and a first moment at which the robot detects the first emotion trigger event.

23. The apparatus according to claim 18 or 19, wherein a first-direction emotion type is a positive emotion type, and a second-direction emotion type is a negative emotion type; or

    the first-direction emotion type is a negative emotion type, and the second-direction emotion type is a positive emotion type; and
    if the type of the emotion indicated by the first emotion change information is the first-direction emotion type, a type of the emotion indicated by the historical emotion information is the second-direction emotion type, and the first type is the first-direction emotion type, the first degree is positively correlated with the change amount of the emotion indicated by the first emotion information, and the first degree is negatively correlated with a degree of the emotion indicated by the historical emotion information.

24. The apparatus according to claim 23, wherein the first degree is positively correlated with first duration, the first degree is negatively correlated with first duration, and the first duration is duration of an interval between a second moment at which the robot detects the second emotion trigger event and a first moment at which the robot detects the first emotion trigger event.

25. A computer device, comprising a processor and a memory, wherein when running computer instructions stored in the memory, the processor performs the method according to any one of claims 1 to 12.

26. A computer-readable storage medium, comprising instructions, wherein when the instructions are run on a computer, the computer is enabled to perform the method according to any one of claims 1 to 12.

27. A computer program product, comprising instructions, wherein when the instructions are run on a computer, the computer is enabled to perform the method according to any one of claims 1 to 12.

28. A robot, comprising an input module, an output module, a processor, and a memory, wherein the input module is configured to detect an emotion trigger event, the memory is configured to store computer instructions, the processor performs the method according to any one of claims 1 to 12 when running the computer instructions stored in the memory, and the output module is configured to execute control information generated by the processor.

29. A robot system, comprising a robot and a server, wherein

    the robot is configured to detect an emotion trigger event, and send the detected emotion trigger event to the server; and
    the server is configured to perform, based on the emotion trigger event detected by the robot, the method according to any one of claims 1 to 12, and send control information to the robot; and
    the robot is further configured to execute the control information sent by the server.

110

Input module
111

Processor
112

Output module
114

Memory
113

FIG. 1A

FIG. 1B

FIG. 1C

In response to detecting a first emotion trigger event by a robot, determine first emotion information based on the first emotion trigger event ⎯ 201

Generate first control information based on the first emotion information ⎯ 202

FIG. 2

TH1

$I1$

0    0.1    0.2    0.3    0.4    0.5    0.6    0.7    0.8    0.9    1.0

FIG. 3A

TH2

$I2$

0    0.1    0.2    0.3    0.4    0.5    0.6    0.7    0.8    0.9    1.0

FIG. 3B

Face 1    Face 2    Face 0

Time

FIG. 4A

Face 1    Face 2    Face 3

Time

FIG. 4B

Face 1    Face 2    Face 4

Time

FIG. 4C

FIG. 5

FIG. 6A

FIG. 6B

FIG. 6C

FIG. 6D

FIG. 6E

Emotion information processing apparatus
700

Determining module 701

Generation module 702

FIG. 7A

Emotion information processing apparatus
700

Determining module 701

Generation module 702

Execution module 703

FIG. 7B

## INTERNATIONAL SEARCH REPORT

| International application No. |
|---|
| **PCT/CN2020/133746** |

**A. CLASSIFICATION OF SUBJECT MATTER**

G06N 3/00(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 机器人, 情绪, 心情, 情感, 感情, 检测, 行为, 触发, 事件, 时间, 时长, robot, emotion, feeling, mood, sensation, detect, behavior, trigger, event, time, period

**C. DOCUMENTS CONSIDERED TO BE RELEVANT**

| Category* | Citation of document, with indication, where appropriate, of the relevant passages | Relevant to claim No. |
|---|---|---|
| PX | CN 111191765 A (HUAWEI TECHNOLOGIES CO., LTD.) 22 May 2020 (2020-05-22) claims 1-29 | 1-29 |
| X | CN 106200959 A (BEIJING GUANGNIAN WUXIAN SCIENCE AND TECHNOLOGY CO., LTD.) 07 December 2016 (2016-12-07) description, paragraphs [0043]-[0108] | 1-29 |
| X | CN 106970703 A (NANJING WECARE SOFTWARE CO., LTD.) 21 July 2017 (2017-07-21) description, paragraphs [0002]-[0005] and [0085]-[0198] | 1-29 |
| A | CN 105345818 A (GOOD FUTURE INTELLIGENT TECHNOLOGY CO., LTD.) 24 February 2016 (2016-02-24) entire document | 1-29 |
| A | CN 106096717 A (BEIJING GUANGNIAN WUXIAN SCIENCE AND TECHNOLOGY CO., LTD.) 09 November 2016 (2016-11-09) entire document | 1-29 |
| A | US 2017365277 A1 (THE GEORGE WASHINGTON UNIVERSITY) 21 December 2017 (2017-12-21) entire document | 1-29 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 February 2021** | **04 March 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/133746**

| Patent document cited in search report | | | Publication date (day/month/year) | Patent family member(s) | Publication date (day/month/year) |
|---|---|---|---|---|---|
| CN | 111191765 | A | 22 May 2020 | None | |
| CN | 106200959 | A | 07 December 2016 | None | |
| CN | 106970703 | A | 21 July 2017 | None | |
| CN | 105345818 | A | 24 February 2016 | None | |
| CN | 106096717 | A | 09 November 2016 | None | |
| US | 2017365277 | A1 | 21 December 2017 | None | |

Form PCT/ISA/210 (patent family annex) (January 2015)

**EP 3 923 198 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911415571